# EUROPÄISCHE PATENTSCHRIFT

(11) **EP 3 720 735 B1**
(45) Veröffentlichungstag und Bekanntmachung des Hinweises auf die Patenterteilung: **30.03.2022**
(21) Anmeldenummer: 18839524.8
(22) Anmeldetag: 27.11.2018
(51) Int. Cl.: B60Q 1/04, B60Q 1/26, B62D 65/16

(54) **MONTAGEMODUL FÜR EINE FAHRZEUGLEUCHTE**
MOUNTING MODULE FOR A VEHICLE LIGHT
MODULE DE MONTAGE POUR UNE LAMPE DE VÉHICULE

(30) Priorität: 05.12.2017 DE 102017128890
(43) Veröffentlichungstag der Anmeldung: 14.10.2020
(73) Patentinhaber: Volkswagen AG, 38440 Wolfsburg (DE); Böllhoff Verbindungstechnik GmbH, 33649 Bielefeld (DE)
(72) Erfinder: RENZ DE FONT, Oliver Jerome, 38440 Wolfsburg (DE); MUECKE, Michaela, 32760 Detmold (DE); KAHRE, Michael, 32052 Herford (DE)
(74) Vertreter: Gulde & Partner
(86) Internationale Anmeldenummer: PCT/EP2018/082652
(87) Internationale Veröffentlichungsnummer: WO 2019/110366

(56) Entgegenhaltungen:
- EP-A2- 1 464 539
- DE-A1-102016 207 868
- DE-U1-202007 016 945
- GB-A- 2 460 155
- JP-U- H0 544 680

## Beschreibung

Die Erfindung betrifft ein Montagesystem für eine Fahrzeugleuchte gemäß dem Oberbegriff des Patentanspruchs 1, eine Fahrzeugleuchte mit dem Montagesystem gemäß dem Oberbegriff des Patentanspruchs 5 sowie ein Montageverfahren zur Befestigung und Einstellung einer Fahrzeugleuchte gemäß dem Oberbegriff des Patentanspruchs 7 und ein Kraftfahrzeug mit dem Montagesystem gemäß dem Oberbegriff des Patentanspruchs 8.

Auf dem technischen Gebiet der Kraftfahrzeuge ist es erforderlich, im Zuge der Montage von Fahrzeugleuchten diese relativ zu dem Kraftfahrzeug zu positionieren und zu orientieren. Dabei werden häufig Einstellelemente verwendet, die gleichzeitig auch als Befestigungselement agieren. Eine besondere technische Anforderung hierbei ist die Möglichkeit einer Einstellung, nachdem die Fahrzeugleuchte an dem Kraftfahrzeug befestigt worden ist, um Toleranzen zu den umliegenden Bauteilen auszugleichen. Somit gilt es, eine Vielzahl von Funktionen in dem Einstellelement zu integrieren, wohingegen gleichzeitig der verfügbare Bauraum beschränkt ist. Auch soll die Einstellung möglichst sicher erfolgen, wobei eine Notwendigkeit der Einstellungen in mehreren Freiheitsgraden gleichzeitig zu vermeiden ist.

Beispielsweise beschreibt die DE 10 2016 101 634 A1 ein Justageelement zum Positionieren eines Anbauteils. Das Justageelement weist einen nach Art eines Kugelgelenks an einem Justageabschnitt gelagerten Anlageabschnitt auf.

Ferner offenbart die DE 10 2014 009 830 B3 eine Befestigungsanordnung für eine Fahrzeugleuchte. Die Anordnung weist ein Fixierelement auf, welches einen Abstand zwischen dem Leuchtengehäuse und einem Karosserieblech festlegt.

Ferner beschreibt die DE 10 2016 207 868 A1 ein Montagemodul zur Befestigung und Einstellung einer Fahrzeugleuchte an einer Fahrzeugstruktur. Das Montagemodul ermöglicht eine Abstandseinstellung zwischen der Fahrzeugleuchte und dem Fahrzeug.

DE 20 2007 016 945 U1 offenbart ein Verstellelement, das dem Fixieren und Positionieren eines Scheinwerfers im Fahrzeugbau dient. Das Verstellelement umfasst eine Hohlschraube, ein Innenelement, das innerhalb der Hohlschraube angeordnet ist und an dem die Hohlschraube drehbar befestigt ist, und eine Scheibe, die in axialer Richtung des Innenelementes zwischen Hohlschraube und Innenelement lateral verschiebbar gehalten ist. DE 10 2016 207 868 A1 offenbar ein Montagemodul zur Befestigung und Einstellung einer Fahrzeugleuchte an einer Fahrzeugstruktur. Das Montagemodul umfasst ein Einstellelement, welches drehbar ist und mit einem Außengewinde in ein entsprechendes Gegengewinde der Fahrzeugleuchte einbringbar ist.

GB 2460155 A offenbart eine Justagevorrichtung für einen Fahrzeugscheinwerfer. Der Justagevorrichtung ist ein Schraubwerkzeug zugeordnet, mittels dem eine Hohlschraube betätigt werden kann.

EP 1 464 539 A2 offenbart eine Ausrichtvorrichtung für einen Scheinwerfer, mit einem Einstellelement, das zwischen einem Fahrzeugaufbau und einem Tragteil des Scheinwerfers angeordnet ist.

Der Erfindung liegt nun die Aufgabe zugrunde, ein neues Montagesystem für eine Fahrzeugleuchte zu schaffen, das insbesondere einen einfacheren Aufbau aufweist, als die bekannten technischen Lösungen, und darüber hinaus eine sichere Justage in allen translatorischen Freiheitsgraden ermöglicht.

Die Aufgabe wird durch die Gegenstände der unabhängigen Ansprüche 1,5, 7 und 8 gelöst.

Weitere bevorzugte Ausgestaltungen der Erfindung ergeben sich aus den übrigen, in den Unteransprüchen genannten Merkmalen.

Ein erster Aspekt der vorliegenden Erfindung betrifft ein Montagesystem für eine Fahrzeugleuchte, umfassend wenigstens:
- eine Schraubhülse mit Außengewinde und einer ersten Längsachse;
- ein Befestigungselement;
- ein komplementäres Befestigungselement mit einer zweiten Längsachse;
- ein Justageelement, das im Bereich einer inneren Mantelfläche der Schraubhülse mit der Schraubhülse derart verbunden ist, dass es relativ zu der Schraubhülse rotatorisch um die erste Längsachse beweglich ist; wobei
- das Justageelement einen Justageabschnitt aufweist, durch den das komplementäre Befestigungselement hindurchführbar ist und dann unter Fixierung des Justageelements mit dem Befestigungselement verbindbar ist; und
- der Justageabschnitt und das komplementäre Befestigungselement derart aufeinander abgestimmt sind, dass das Justageelement in nicht fixiertem Zustand in einer sich orthogonal zu der zweiten Längsachse erstreckenden Verstellebene und dabei relativ zu dem durch den Justageabschnitt hindurchgeführten komplementären Befestigungselement verschiebbar ist; und
das Justageelement einteilig ausgebildet ist.

Das Befestigungselement kann beispielsweise eine Schweißmutter, Blindnietmutter oder eine sonstige technische Lösung sein, mit der sich eine Verbindung zwischen einer Fahrzeugstruktur und weiteren Komponenten herstellen lässt. Vorzugsweise kann das komplementäre Befestigungselement eine Schraube sein. Beispielsweise kann das einteilig ausgebildete Justageelement zwischen der Befestigungsschraube und einer Blindnietmutter, in welche die Befestigungsschraube eingeführt wird, festgeklemmt und somit fixiert werden. Das Justageelement ist formschlüssig mit der Schraubhülse verbunden, so dass aufgrund vom Fachmann selbstständig vorgesehener Toleranzen eine rotatorische Relativbewegung ermöglicht ist. Somit kann die Schraubhülse auf dem Justageelement gedreht werden, selbst wenn das Justageelement fixiert ist. Auf diese Weise kann die Fahrzeugleuchte auf dem Außengewinde der Schraubhülse lateral verstellt werden.

Da das Justageelement direkt mit der Schraubhülse verbunden ist, ist das Montagesystem der Erfindung besonders einfach aufgebaut. Da die relative Beweglichkeit zwischen Schraubhülse und Justageelement mit nur diesen zwei Komponenten realisiert ist, werden Herstellung und Zusammenbau des Montagesystems signifikant vereinfacht. Da auch die Anzahl an Werkstoffpaarungen reduziert wird, verringern sich auch Risikofaktoren für die Langlebigkeit des Montagesystems, wie beispielsweise Korrosion.

Erfindungsgemäß ist vorgesehen, dass das Justageelement eine Ringscheibe ist, die in der Schraubhülse eingefasst ist, und dass eine Durchgangsbohrung der Ringscheibe die Verstellebene definiert.

Die Ringscheibe kann beispielsweise mit dem Werkstoff der Schraubhülse umspritzt werden, wobei zur Gewährleistung der Beweglichkeit der Schraubhülse auf dem Justageelement entsprechende Toleranzen vorgesehen werden. Der Fachmann auf dem Gebiet der Kunststoffverarbeitung verfügt hier über entsprechendes Fachwissen. Ebenso kann die Schraubhülse aber auch mit einer Ringnut versehen sein, in die die Ringscheibe eingebracht ist. Die Ringscheibe kann zu einem solchen Zweck beispielsweise auch nach Art eines Sprengrings ausgebildet sein.

Durch all dies wird der Aufbau des Montagesystems weiterhin vereinfacht. Insbesondere die erstgenannte Variante des Umspritzens des Justageelements ermöglicht eine Herstellung der Schraubhülse und deren Montage mit der Ringscheibe in nur einem Arbeitsschritt. Vorteilhaft kann die Ringscheibe als kostengünstiges Normteil bezogen werden und deren Innendurchmesser einfach und flexibel sogar noch während der Montage der Fahrzeugleuchte angepasst werden.

In weiter bevorzugter Ausgestaltung der Erfindung ist vorgesehen, dass das Justageelement in nicht fixiertem Zustand in der Verstellebene, ausgehend von deren Zentrum, um mindestens +/-1 mm, vorzugsweise um mindestens +/- 2 mm, weiterhin vorzugsweise um mindestens +/- 3 mm, weiterhin vorzugsweise um mindestens +/- 4 mm und weiterhin vorzugsweise um mindestens +/- 5 mm in alle Richtungen verschiebbar ist. Im Ermessen des Fachmanns kann die Verschiebbarkeit auch noch größer sein, unter Berücksichtigung des zur Montage benötigten Verstellbereichs.

Besonders bevorzugt ist eine Verstellung um +/- 1,5 mm in alle Richtungen möglich.

Eine noch größere Verstellbarkeit deckt vorteilhaft auch noch größere Fertigungs- und Montagetoleranzen bei der Verbindung der Fahrzeugleuchte mit dem Kraftfahrzeug ab.

In weiter bevorzugter Ausgestaltung der Erfindung ist vorgesehen, dass das Außengewinde ein selbstschneidendes Gewinde ist.

Ein selbstschneidendes Gewinde bietet den Vorteil, dass an der Fahrzeugleuchte kein separates Innengewinde hergestellt werden muss. Darüber hinaus ermöglichen die selbsthemmenden Eigenschaften des selbstschneidenden Gewindes eine sichere Justage der Fahrzeugleuchte, ohne dass zusätzliche Befestigungs- und Sicherungselemente erforderlich sind.

In bevorzugter Ausgestaltung der vorliegenden Erfindung umfasst das Montagesystem ein Montagewerkzeug zur Einstellung des Montagesystems, wobei das Montagewerkzeug einen Schraubansatz aufweist, der entlang einer ersten Längsachse einer Schraubhülse des Montagesystems in eine Schraubansatzaufnahme der Schraubhülse einführbar ist, und wobei das Montagewerkzeug weiterhin eine Abstreifstruktur aufweist, die sich dann entlang eines Außengewindes der Schraubhülse und entlang der ersten Längsachse erstreckt.

Rein exemplarisch kann der Schraubansatz beispielsweise ein Vierkantprofil aufweisen und die Schraubansatzaufnahme ein entsprechend negatives Vierkantprofil darstellen. Während der Schraubansatz mit der inneren Mantelfläche der Schraubhülse in Kontakt gebracht werden kann, überragt das Montagewerkzeug im Übrigen die Grundfläche der Schraubhülse und erstreckt sich entlang einer äußeren Mantelfläche und somit entlang des Außengewindes. In diesem Bereich bildet es die Abstreifstruktur.

Da sich die Abstreifstruktur entlang der ersten Längsachse erstreckt, was auch für den Schraubansatz gilt, kann die Fahrzeugleuchte, die sich auf dem Außengewinde der Schraubhülse entlang der ersten Längsachse bewegt, gegen die Abstreifstruktur geschraubt werden und somit den Schraubansatz sicher aus der Schraubansatzaufnahme herausdrücken, bevor die Fahrzeugleuchte selbst das Ende der Schraubhülse erreicht.

Ein zweiter Aspekt der vorliegenden Erfindung betrifft eine Fahrzeugleuchte mit einem Montagesystem.

In bevorzugter Ausgestaltung der Erfindung ist vorgesehen, dass die Fahrzeugleuchte über ein Außengewinde einer Schraubhülse des Montagesystems entlang einer ersten Längsachse der Schraubhülse verstellbar ist und ein erster Totpunkt eines Verstellwegs durch einen an der Schraubhülse vorgesehenen Anschlag definiert ist und ein zweiter Totpunkt dadurch definiert ist, dass die Fahrzeugleuchte infolge einer Betätigung des Montagewerkzeugs mit einer Abstreifstruktur des Montagewerkzeugs in Kontakt gebracht wird und dies im Falle einer fortwährenden Betätigung des Montagewerkzeugs zu einem Auslösen eines Schraubansatzes des Montagewerkzeugs aus einer Schraubansatzaufnahme der Schraubhülse führt.

Dies bietet den Vorteil, dass der Verstellweg der Fahrzeugleuchte entlang der ersten Längsachse in beide Richtungen sicher begrenzt ist, so dass die Fahrzeugleuchte weder von der Schraubhülse herunterspringt noch gegen die Fahrzeugstruktur gedrückt werden kann.

Ein dritter Aspekt der vorliegenden Erfindung betrifft ein Montageverfahren zur Befestigung und Einstellung einer Fahrzeugleuchte, umfassend wenigstens die folgenden Schritte:
- Befestigung eines Befestigungselements an einer Fahrzeugstruktur;
- Verbindung einer Schraubhülse und eines Justageelements im Bereich einer inneren Mantelfläche der Schraubhülse, so dass das Justageelement relativ zu der Schraubhülse rotatorisch um eine erste Längsachse der Schraubhülse beweglich ist;
- Verbindung der Fahrzeugleuchte mit der Schraubhülse über ein Außengewinde der Schraubhülse;
- Anordnung des Justageelements im Bereich des Befestigungselements und Hindurchführung eines komplementären Befestigungselements mit einer zweiten Längsachse durch einen Justageabschnitt des Justageelements bis zu dem Befestigungselement und Vormontage mit dem selbigen.

Erfindungsgemäß ist vorgesehen, dass nach der Vormontage die Fahrzeugleuchte zwecks ihrer Positionierung in einer sich orthogonal zu der zweiten Längsachse erstreckenden Verstellebene verschoben wird und die Fahrzeugleuchte dann in ihrer Zielposition durch vollständige Fixierung des Justageelements zwischen dem Befestigungselement und dem komplementären Befestigungselement festgelegt wird und abschließend eine Einstellung der Fahrzeugleuchte entlang der ersten Längsachse unter Drehung der Schraubhülse erfolgt.

Dadurch, dass zunächst durch Fixierung des Justageelements zwei translatorische Freiheitsgrade eingeschränkt werden und dann eine Verstellung der Fahrzeugleuchte über die Schraubhülse in dem dritten translatorischen Freiheitsgrad erfolgt, ist die Montage der Fahrzeugleuchte und deren Einstellung besonders genau und sicher möglich.

Ein vierter Aspekt der vorliegenden Erfindung betrifft ein Kraftfahrzeug mit einem erfindungsgemäßen Montagesystem gemäß der obigen Beschreibung und/oder einer erfindungsgemäßen Fahrzeugleuchte gemäß der obigen Beschreibung.

Zusammenfassend lässt sich mit anderen Worten ausgedrückt nochmals festhalten, dass die vorliegende Erfindung ein Montagesystem zur Befestigung und Einstellung einer Fahrzeugleuchte an einem Kraftfahrzeug betrifft. Das Montagesystem umfasst eine Gewindehülse, welche in die Fahrzeugleuchte geschraubt wird. In die innere Mantelfläche der Gewindehülse ist eine Scheibe eingefasst, die um die Längsachse der Gewindehülse rotatorisch beweglich ist. Die Scheibe weist mittig eine Bohrung auf, durch die eine Befestigungsschraube hindurchführbar und mit einer Befestigungsmutter konterbar ist. Die Befestigungsmutter weist eine Schnittstelle auf, mit der sie an einer Fahrzeugstruktur befestigt werden kann. Solange die Befestigungsschraube noch nicht fest mit der Befestigungsmutter verschraubt ist, lässt sich die Scheibe noch zwischen der Befestigungsschraube und der Befestigungsmutter verschieben. So kann die Fahrzeugleuchte noch transversal in einer Ebene positioniert werden, wobei die Ebene einer Auflageebene der Befestigungsmutter an der unmittelbar angrenzenden Fahrzeugstruktur entspricht. In der Zielposition kann die Befestigungsschraube angezogen werden, wodurch die Scheibe festgelegt wird. Nun ist nur noch eine rotatorische Relativbewegung zwischen der Gewindehülse und der Scheibe möglich, wodurch die Fahrzeugleuchte noch entlang der Längsachse der Gewindehülse verstellt werden kann.

Die verschiedenen in dieser Anmeldung genannten Ausführungsformen der Erfindung sind, sofern im Einzelfall nicht anders ausgeführt, mit Vorteil miteinander kombinierbar. Die Erfindung wird nachfolgend in Ausführungsbeispielen anhand der zugehörigen Zeichnungen erläutert. Es zeigen:
- Figur 1: eine erfindungsgemäße Fahrzeugleuchte, montiert mit einem erfindungsgemäßen Montagesystem;
- Figur 2: ein Blockschema eines erfindungsgemäßen Montageverfahrens und
- Figur 3: ein erfindungsgemäßes Kraftfahrzeug.

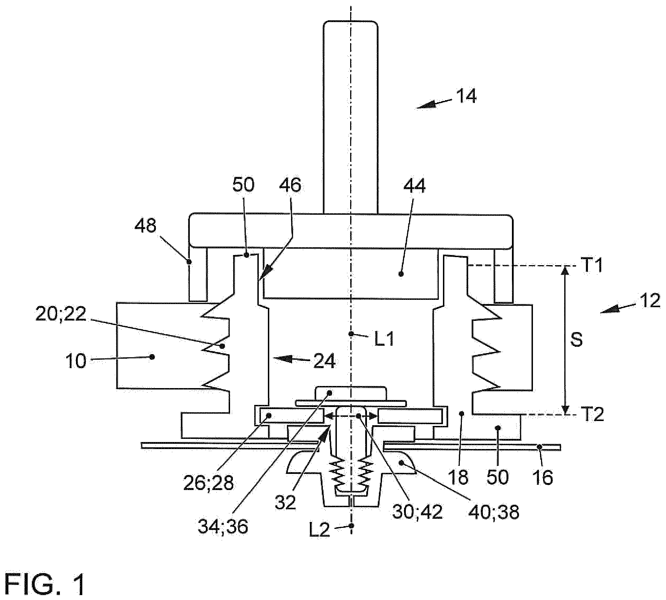

Figur 1 zeigt eine erfindungsgemäße Fahrzeugleuchte 10, die mit einem erfindungsgemäßen Montagesystem 12 unter Verwendung eines Montagewerkzeugs 14 an einer Fahrzeugstruktur 16 befestigt und eingestellt wird.

Das Montagesystem 12 umfasst eine Schraubhülse 18, welche ein Außengewinde 20 aufweist. Das Außengewinde 20 ist vorliegend ein selbstschneidendes Gewinde 22. Über das selbstschneidende Gewinde 22 ist die Fahrzeugleuchte 10 entlang einer ersten Längsachse L1 der Schraubhülse 18 translatorisch verstellbar, wobei durch das selbstschneidende Gewinde 22 und dessen Selbsthemmung eine sichere Positionierung gewährleistet ist.

An der Schraubhülse 18 ist im Bereich ihrer inneren Mantelfläche 24 ein Justageelement 26 vorgesehen. Bei dem Justageelement 26 handelt es sich vorliegend um eine Ringscheibe 28, welche in die Schraubhülse 18 eingefasst ist. Die Ringscheibe 28 ist derart eingefasst, dass diese noch relativ zu der Schraubhülse 18 rotatorisch um deren erste Längsachse L1 beweglich ist.

In etwa mittig weist die Ringscheibe 28 eine Durchgangsbohrung 30 auf. Durch die Durchgangsbohrung 30 wird ein Justageabschnitt 32 gebildet, durch welchen vorliegend ein komplementäres Befestigungselement 34 in Form einer Befestigungsschraube 36 geführt ist.

An der dem Schraubenkopf abgewandten Seite der Ringscheibe 28 befindet sich ein Befestigungselement 38, vorliegend in Form einer Blindnietmutter 40. Die Blindnietmutter 40 ist fest mit der Fahrzeugstruktur 16 verbunden. Die Befestigungsschraube 36 wird zunächst in einem Innengewinde der Blindnietmutter 40 vormontiert aber noch nicht vollständig angezogen. Solange die Befestigungsschraube 36 noch nicht vollständig angezogen ist, ist die Ringscheibe 28 zwischen Schraubenkopf und Blindnietmutter 40 noch beweglich. Die Durchgangsbohrung 30 und die Befestigungsschraube 36 sind derart aufeinander abgestimmt, dass die Befestigungsschraube 36 orthogonal zu einer zweiten Längsachse L2 der Blindnietmutter 40 in einer von der Durchgangsbohrung 30 gebildeten Verstellebene 42 verschoben werden kann. In dem in Figur 1 gezeigten Zustand fluchten die Längsachsen L1 und L2. Wird die Ringscheibe 28 gegenüber der Befestigungsschraube 36 verschoben, so verschieben sich die Längsachsen L1 und L2 entsprechend parallel zueinander. Vorliegend sind die Durchgangsbohrungen 30 und die Befestigungsschraube 36 so aufeinander abgestimmt, dass eine Verschiebung, ausgehend vom Zentrum der Durchgangsbohrung 30, um +/- 3 mm ermöglicht ist. In der gezeigten Ansicht wird das Zentrum der Durchgangsbohrung 30 durch die Längsachsen L1 und L2 markiert.

In der Zielposition der Ringscheibe 28 wird die Befestigungsschraube 36 fest angezogen und die Ringscheibe 28 somit zwischen der Blindnietmutter 40 und der Befestigungsschraube 36 fest eingeklemmt.

Zur folgenden Einstellung der Fahrzeugleuchte 10 über das Außengewinde 20 wird vorliegend das Montagewerkzeug 14 verwendet. Die Verstellung der Fahrzeugleuchte 10 entlang der ersten Längsachse L1 erfolgt durch Drehung der Schraubhülse 18. Hierzu weist das Montagewerkzeug 14 einen Schraubansatz 44 auf. Dieser ist in eine entsprechend negativ zu ihm ausgebildete Schraubansatzaufnahme 46 eingesetzt. Durch Drehung des Montagewerkzeugs 14 dreht sich die Schraubhülse 18.

Das Montagewerkzeug 14 weist ferner eine Abstreifstruktur 48 auf. Ist der Schraubansatz 44 in der Schraubansatzaufnahme 46 platziert, so überragt das Montagewerkzeug 14 eine Grundfläche 50 der Schraubhülse 18 und die Abstreifstruktur 48 erstreckt sich dann entlang des Außengewindes 20 beziehungsweise parallel zur ersten Längsachse L1.

Wird die Schraubhülse 18 mit dem Montagewerkzeug 14 nun derart gedreht, dass sich die Fahrzeugleuchte 10 auf das Montagewerkzeug 14 zubewegt, gerät es irgendwann in Kontakt mit der Abstreifstruktur 48. Wird das Montagewerkzeug 14 dann noch weiter gedreht, drückt die Fahrzeugleuchte 10 den Schraubansatz 44 aus der Schraubansatzaufnahme 46 heraus. Ein versehentliches Demontieren von Fahrzeugleuchte 10 und Schraubhülse 18 ist mit dem Montagewerkzeug 14 somit unmöglich. Der Punkt entlang der ersten Längsachse L1, an dem der Schraubansatz 44 aus der Schraubansatzaufnahme 46 gelöst wird, bildet somit einen ersten Totpunkt T1 eines Verstellwegs S, den die Fahrzeugleuchte 10 entlang der Schraubhülse 18 zurücklegen kann. Ein zweiter Totpunkt T2 ist weiterhin durch einen an der Schraubhülse 18 vorgesehenen Anschlag 50 definiert.

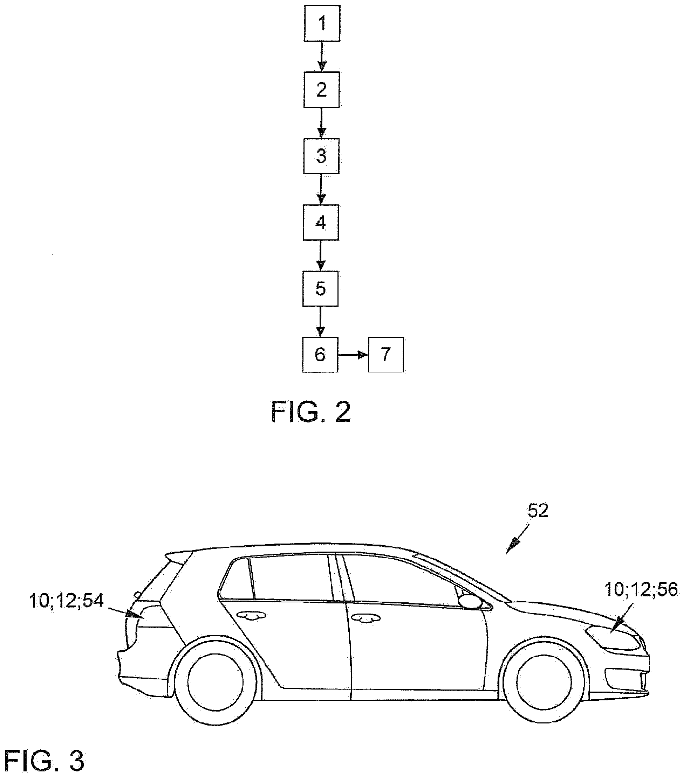

Figur 2 zeigt ein Blockschema eines erfindungsgemäßen Montageverfahrens zur Befestigung und Einstellung einer Fahrzeugleuchte 10. Bevorzugt wird in dem Verfahren eine erfindungsgemäße Fahrzeugleuchte 10 mit einem erfindungsgemäßen Montagesystem 12 montiert. Einige Verfahrensschritte sowie die Verwendung eines Montagewerkzeugs 14 wurden bereits in Bezug auf Figur 1 erläutert. Vorliegend werden die wesentlichen Verfahrensschritte nochmals zusammengepasst:
In einem ersten Verfahrensschritt wird zunächst ein Befestigungselement 38 an einer Fahrzeugstruktur 16 befestigt. In einem zweiten Verfahrensschritt erfolgt dann die Verbindung einer Schraubhülse 18 und eines Justageelements 26 im Bereich einer inneren Mantelfläche 24 der Schraubhülse 18, so dass das Justageelement 26 relativ zu der Schraubhülse 18 rotatorisch um eine erste Längsachse L1 der Schraubhülse 18 beweglich ist. In einem dritten Verfahrensschritt erfolgt dann eine Verbindung der Fahrzeugleuchte 10 mit der Schraubhülse 18 über ein Außengewinde 20 der Schraubhülse 18. In einem vierten Verfahrensschritt wird das Justageelement 26 im Bereich des Befestigungselements 38 angeordnet und ein komplementäres Befestigungselement 34 durch einen Justageabschnitt 32 des Justageelements 26 hindurchgeführt, bis es das Befestigungselement 38 erreicht und mit diesem vormontiert wird. In einem fünften Verfahrensschritt erfolgt nach dieser Vormontage eine Positionierung der Fahrzeugleuchte 10, indem diese in einer Verstellebene 42, welche sich orthogonal zu einer zweiten Längsachse L2 des komplementären Befestigungselements 34 erstreckt, verschoben wird. In einem sechsten Verfahrensschritt erfolgt dann in der Zielposition der Fahrzeugleuchte 10 deren Festlegung, indem das Justageelement 26 vollständig zwischen dem Befestigungselement 38 und dem komplementären Befestigungselement 34 fixiert wird. In einem siebten Verfahrensschritt erfolgt dann noch eine Verstellung der Fahrzeugleuchte 10 entlang einer ersten Längsachse L1 der Schraubhülse 18, indem die Schraubhülse 18 gedreht wird.

Figur 3 zeigt ein erfindungsgemäßes Kraftfahrzeug 52. Das Kraftfahrzeug 52 weist erfindungsgemäße Fahrzeugleuchten 10 auf, die mit erfindungsgemäßen Montagesystemen 12 an unterschiedlichen Anbaupositionen vorgesehen sind. Bei den Fahrzeugleuchten 10 handelt es sich rein exemplarisch um ein Rücklicht 54 und einen Scheinwerfer 56. Selbstverständlich können im Ermessen des Fachmannes auch andere Beleuchtungsvorrichtungen mit dem erfindungsgemäßen Montagesystem 12 befestigt und eingestellt werden.
- 10: Fahrzeugleuchte
- 12: Montagesystem
- 14: Montagewerkzeug
- 16: Fahrzeugstruktur
- 18: Schraubhülse
- 20: Außengewinde
- 22: Gewinde
- 24: Mantelfläche
- 26: Justageelement
- 28: Ringscheibe
- 30: Durchgangsbohrung
- 32: Justageabschnitt
- 34: komplementäres Befestigungselement
- 36: Befestigungsschraube
- 38: Befestigungselement
- 40: Blindnietmutter
- 42: Verstellebene
- 44: Schraubansatz
- 46: Schraubansatzaufnahme
- 48: Abstreifstruktur
- 50: Anschlag
- 52: Kraftfahrzeug
- 54: Rücklicht
- 56: Scheinwerfer

- L1: erste Längsachse
- L2: zweite Längsachse
- S: Verstellweg
- T1: erster Totpunkt
- T2: zweiter Totpunkt

**Bezugszeichenliste**

## Patentansprüche

1. Montagesystem (12) für eine Fahrzeugleuchte (10), umfassend wenigstens:
- eine Schraubhülse (18) mit Außengewinde (20) und einer ersten Längsachse (L1);
- ein Befestigungselement (38);
- ein komplementäres Befestigungselement (34) mit einer zweiten Längsachse (L2);
- ein Justageelement (26), dass im Bereich einer inneren Mantelfläche (24) der Schraubhülse (18) mit der Schraubhülse (18) derart verbunden ist, dass es relativ zu der Schraubhülse (18) rotatorisch um die erste Längsachse (L1) beweglich ist; wobei
- das Justageelement (26) einen Justageabschnitt (32) aufweist, durch den das komplementäre Befestigungselement (34) hindurchführbar ist und dann unter Fixierung des Justageelements (26) mit dem Befestigungselement (38) verbindbar
ist; und
- der Justageabschnitt (32) und das komplementären Befestigungselement (34) derart aufeinander abgestimmt sind, dass das Justageelement (26) in nicht fixiertem Zustand in einer sich orthogonal zu der zweiten Längsachse (L2) erstreckenden Verstellebene (42) und dabei relativ zu dem durch den Justageabschnitt (32) hindurchgeführten komplementären Befestigungselement (34) verschiebbar ist; und das Justageelement (26) einteilig ausgebildet ist,
**dadurch gekennzeichnet, dass** das Justageelement (26) eine Ringscheibe (28) ist, die in der Schraubhülse (18) eingefasst ist, und dass eine Durchgangsbohrung (30) der Ringscheibe (28) die Verstellebene (42) definiert.

2. Montagesystem (12) nach Anspruch 1, **dadurch gekennzeichnet, dass** das Justageelement (26) in nicht fixiertem Zustand in der Verstellebene (42), ausgehend von deren Zentrum, um mindestens +/- 1 mm in alle Richtungen verschiebbar ist.

3. Montagesystem (12) nach Anspruch 1 bis 2, **dadurch gekennzeichnet, dass** das Außengewinde (20) ein selbstschneidendes Gewinde (22) ist.

4. Montagesystem (12) nach einem der
Ansprüche 1 bis 3, **dadurch gekennzeichnet, dass** das Montagesystem (12) ein Montagewerkzeug (14) umfasst, wobei das Montagewerkzeug (14) einen
Schraubansatz (44) aufweist, der entlang einer ersten Längsachse (L1) einer Schraubhülse (18) des Montagesystems (14) in eine Schraubansatzaufnahme (46) der
Schraubhülse (18) einführbar ist, und wobei das Montagewerkzeug (14) weiterhin eine
Abstreifstruktur (48) aufweist, die sich dann entlang eines Außengewindes (20) der Schraubhülse (18) und entlang der ersten Längsachse (L1) erstreckt.

5. Fahrzeugleuchte (10) mit einem Montagesystem (12) nach einem der Ansprüche 1 bis 4.

6. Fahrzeugleuchte (10) nach Anspruch 5, wenn das Montagesystem (12) nach Anspruch 4 ausgeführt ist, **dadurch gekennzeichnet, dass** die Fahrzeugleuchte (10) über ein Außengewinde (20) einer Schraubhülse (18) des Montagesystems (12) entlang einer ersten Längsachse (L1) der Schraubhülse (18) verstellbar ist und ein erster Totpunkt (T1) eines Verstellwegs (S) durch einen an der Schraubhülse (18) vorgesehenen Anschlag (50) definiert ist und ein zweiter Totpunkt (T2) dadurch definiert ist, dass die Fahrzeugleuchte (10) infolge einer Betätigung des Montagewerkzeugs (14) mit einer Abstreifstruktur (48) des Montagewerkzeugs (14) in Kontakt gebracht wird und dies im Falle einer fortwährenden Betätigung des Montagewerkzeugs (14) zu einem Auslösen eines Schraubansatzes (44) des Montagewerkzeugs (14) aus einer Schraubansatzaufnahme (46) der Schraubhülse (18) führt.

7. Montageverfahren zur Befestigung und Einstellung einer Fahrzeugleuchte (10) mit einem Montagesystem nach einem der Ansprüche 1 bis 4, umfassend wenigstens die folgenden Schritte:
- Befestigung des Befestigungselements (38) an einer Fahrzeugstruktur (16);
- Verbindung der Schraubhülse (18) und des Justageelements (26) im Bereich der inneren Mantelfläche (24) der Schraubhülse (18), so dass das Justageelement (26) relativ zu der Schraubhülse (18) rotatorisch um eine erste Längsachse (L1) der Schraubhülse (18) beweglich ist;
- Verbindung der Fahrzeugleuchte (10) mit der Schraubhülse (18) über das Außengewinde (20) der Schraubhülse (18);
- Anordnung des Justageelements (26) im Bereich des Befestigungselements (38) und Hindurchführung eines komplementären Befestigungselements (34) mit der zweiten Längsachse (L2) durch den Justageabschnitt (32) des Justageelements
(26) bis zu dem Befestigungselement (34) und Vormontage mit dem selbigen; **dadurch gekennzeichnet, dass** nach der Vormontage die Fahrzeugleuchte (10) zwecks ihrer Positionierung in der sich orthogonal zu der zweiten Längsachse (L2) erstreckenden Verstellebene (42) verschoben wird und die Fahrzeugleuchte (10) dann in ihrer Zielposition durch vollständige Fixierung des Justageelements (26) zwischen dem Befestigungselement (34) und dem komplementären Befestigungselement (34) festgelegt wird und abschließend eine Einstellung der Fahrzeugleuchte (10) entlang der ersten Längsachse (L1) unter Drehung der Schraubhülse (18) erfolgt.

8. Kraftfahrzeug (52) mit einem Montagesystem (12) nach einem der Ansprüche 1 bis 4 und/oder einer Fahrzeugleuchte (10) nach Anspruch 5 oder 6.

## Claims

1. Mounting system (12) for a vehicle light (10) comprising at least:
- a screw sleeve (18) with external thread (20) and a first longitudinal axis (L1);
- a fastening element (38);
- a complementary fastening element (34) with a second longitudinal axis (L2);
- an adjustment element (26) that in the region of an inner lateral surface (24) of the screw sleeve (18) is connected to the screw sleeve (18) in such a way that it is rotationally movable about the first longitudinal axis (L1) relative to the screw sleeve (18); wherein
- the adjustment element (26) comprises an adjustment section (32) through which the complementary fastening element (34) can be guided and can then be connected to the fastening element (38) by fixing the adjustment element (26); and
- the adjustment section (32) and the complementary fastening element (34) are coordinated with one another in such a way that the adjustment element (26) in an unfixed state is displaceable in an adjustment plane (42) extending orthogonally to the second longitudinal axis (L2) and at the same time relative to the complementary fastening element (34) guided through the adjustment section (32); and the adjustment element (26) is integrally formed,
**characterized in that** the adjustment element (26) is an annular disk (28) which is enclosed in the screw sleeve (18), **and that** a through-hole (30) of the annular disk (28) defines the adjustment plane (42).

2. Mounting system (12) according to Claim 1, **characterized in that** the adjustment element (26) in the unfixed state is displaceable in the adjustment plane (42), starting from the center thereof, by at least +/-1 mm in all directions.

3. Mounting system (12) according to Claims 1 to 2, **characterized in that** the external thread (20) is a self-tapping thread (22).

4. Mounting system (12) according to any one of Claims 1 to 3, **characterized in that** the mounting system (12) comprises a mounting tool (14), wherein the mounting tool (14) comprises a screw attachment (44) which can be introduced into a screw attachment receptacle (46) of the screw sleeve (18) along a first longitudinal axis (L1) of a screw sleeve (18) of the mounting system (14), and wherein the mounting tool (14) further comprises a scraping structure (48) which then extends along an external thread (20) of the screw sleeve (18) and along the first longitudinal axis (L1).

5. Vehicle light (10) having a mounting system (12) according to any one of Claims 1 to 4.

6. Vehicle light (10) according to Claim 5 if the mounting system (12) is embodied according to Claim 4, **characterized in that** the vehicle light (10) is adjustable via an external thread (20) of a screw sleeve (18) of the mounting system (12) along a first longitudinal axis (L1) of the screw sleeve (18) and a first dead center (T1) of an adjustment path (S) is defined by a stop (50) provided on the screw sleeve (18), and a second dead center (T2) is defined by the vehicle light (10) being brought into contact with a scraping structure (48) of the mounting tool (14) as a result of an actuation of the mounting tool (14) and this, in the event of continuous actuation of the mounting tool (14), results in a releasing of a screw attachment (44) of the mounting tool (14) from a screw attachment receptacle (46) of the screw sleeve (18).

7. Mounting method for attaching and adjusting a vehicle light (10) having a mounting system according to any one of Claims 1 to 4, comprising at least the following steps:
- fastening the fastening element (38) to a vehicle structure (16);
- connecting the screw sleeve (18) and the adjustment element (26) in the region of the inner lateral surface (24) of the screw sleeve (18) so that the adjustment element (26) is rotationally movable about a first longitudinal axis (L1) of the screw sleeve (18) relative to the screw sleeve (18);
- connecting the vehicle light (10) to the screw sleeve (18) via the external thread (20) of the screw sleeve (18);
- arranging the adjustment element (26) in the region of the fastening element (38) and guiding a complementary fastening element (34) with the second longitudinal axis (L2) through the adjustment section (32) of the adjustment element (26) up to the fastening element (34) and pre-assembly with the same,
**characterized in that,** after pre-assembly, the vehicle light (10) is displaced for the purpose of the positioning thereof in the adjustment plane (42) extending orthogonally to the second longitudinal axis (L2), and the vehicle light (10) is then fixed in its target position by complete fixing of the adjustment element (26) between the fastening element (34) and the complementary fastening element (34), and finally an adjustment of the vehicle light (10) along the first longitudinal axis (L1) is effected by rotating the screw sleeve (18).

8. Motor vehicle (52) with a mounting system (12) according to any one of Claims 1 to 4 and/or a vehicle light (10) according to Claims 5 or 6.

## Revendications

1. Système de montage (12) pour une lampe de véhicule (10), comprenant au moins :
- un manchon fileté (18) présentant un filetage externe (20) et un premier axe longitudinal (L1) ;
- un élément de fixation (38) ;
- un élément de fixation complémentaire (34) avec un second axe longitudinal (L2) ;
- un élément d'ajustement (26), qui est relié, dans la zone d'une surface enveloppante interne (24) du manchon fileté (18), avec le manchon fileté (18) de manière à être mobile par rapport au manchon fileté (18) en rotation autour du premier axe longitudinal (L1) ; dans lequel
- l'élément d'ajustement (26) présente une section d'ajustement (32), à travers laquelle l'élément de fixation complémentaire (34) peut être introduit et qui peut être reliée à l'élément de fixation (38) lors de la fixation de l'élément d'ajustement (26) ; et
- la section d'ajustement (32) et l'élément de fixation complémentaire (34) sont adaptés l'un à l'autre de telle sorte que l'élément d'ajustement (26), dans l'état non fixé, puisse être déplacé dans un plan de réglage (42) s'étendant orthogonalement au second axe longitudinal (L2) et ainsi par rapport à l'élément de fixation complémentaire (34) introduit à travers la section d'ajustement (32) et l'élément d'ajustement (26) est formé en une seule pièce,
**caractérisé en ce que** l'élément d'ajustement (26) est une rondelle (28), qui est bordée dans le manchon fileté (18) **et en ce qu'**un alésage traversant (30) de la rondelle (28) définit le plan de réglage (42).

2. Système de montage (12) selon la revendication 1, **caractérisé en ce que** l'élément d'ajustement (26), dans l'état non fixé, est mobile dans le plan de réglage (42), en partant de son centre, d'au moins +/- 1 mm dans toutes les directions.

3. Système de montage (12) selon la revendication 1 à 2, **caractérisé en ce que** le filetage externe (20) est un filetage autotaraudeur (22).

4. Système de montage (12) selon l'une quelconque des revendications 1 à 3, **caractérisé en ce que** le système de montage (12) comprend un outil de montage (14), dans lequel l'outil de montage (14) présente un embout fileté (44), qui peut être introduit, le long d'un premier axe longitudinal (L1) d'un manchon fileté (18) du système de montage (14), dans une cavité d'embout fileté (46) du manchon fileté (18) et dans lequel l'outil de montage (14) présente en outre une structure d'égalisation (48), qui s'étend le long d'un filetage externe (20) du manchon fileté (18) et le long du premier axe longitudinal (L1).

5. Lampe de véhicule (10) comprenant un système de montage (12) selon l'une quelconque des revendications 1 à 4.

6. Lampe de véhicule (10) selon la revendication 5, lorsque le système de montage (12) est réalisé selon la revendication 4, **caractérisée en ce que** la lampe de véhicule (10) est réglable par le biais d'un filetage externe (20) d'un manchon fileté (18) du système de montage (12) le long d'un premier axe longitudinal (L1) du manchon fileté (18) et un premier point mort (T1) d'une course de réglage (S) est défini par une butée (50) disposée sur le manchon fileté (18) et un deuxième point mort (T2) est défini **en ce que** la lampe de véhicule (10), à la suite d'un actionnement de l'outil de montage (14), est amenée en contact avec une structure d'égalisation (48) de l'outil de montage (14) et cela entraîne, en cas d'actionnement continu de l'outil de montage (14), une libération d'un embout fileté (44) de l'outil de montage (14) hors d'une cavité d'embout fileté (46) du manchon fileté (18).

7. Procédé de montage pour la fixation et le réglage d'une lampe de véhicule (10) avec un système de montage selon l'une quelconque des revendications 1 à 4, comprenant au moins les étapes suivantes :
- fixation de l'élément de fixation (38) sur une structure du véhicule (16) ;
- liaison du manchon fileté (18) et de l'élément d'ajustement (26) dans la zone de la surface enveloppante interne (24) du manchon fileté (18), de telle sorte que l'élément d'ajustement (26) soit mobile par rapport au manchon fileté (18) en rotation autour d'un premier axe longitudinal (L1) du manchon fileté (18) ;
- liaison de la lampe de véhicule (10) avec le manchon fileté (18) par le biais du filetage externe (20) du manchon fileté (18) ;
- agencement de l'élément d'ajustement (26) dans la plage de l'élément de fixation (38) et introduction d'un élément de fixation complémentaire (34) avec le second axe longitudinal (L2) à travers la section d'ajustement (32) de l'élément d'ajustement (26) jusqu'à l'élément de fixation (34) et assemblage avec celui-ci ;
**caractérisé en ce que,** après l'assemblage, la lampe de véhicule (10) est déplacée pour son positionnement dans le plan de réglage (42) s'étendant orthogonalement au second axe longitudinal (L2) et la lampe de véhicule (10) est ensuite fixée dans sa position cible par fixation complète de l'élément d'ajustement (26) entre l'élément de fixation (34) et l'élément de fixation complémentaire (34) et ensuite un réglage de la lampe de véhicule (10) est effectué le long du premier axe longitudinal (L1) par rotation du manchon fileté (18).

8. Véhicule automobile (52) comprenant un système de montage (12) selon l'une quelconque des revendications 1 à 4 et/ou une lampe de véhicule (10) selon la revendication 5 ou 6.
